# EUROPEAN PATENT APPLICATION

(11) **EP 2 299 110 A1**
(43) Date of publication of application: **23.03.2011**
(21) Application number: 09164276.9
(22) Date of filing: 01.07.2009
(51) Int. Cl.: F03D 7/02, F03D 11/00

(54) **Bearing mechanism**

(71) Applicant: PEM-Energy Oy, 00210 Helsinki (FI)
(72) Inventor: Rönkkö, Väinö, 74120 IISALMI (FI); Pylkkänen, Juhani, 41340 Laukaa (FI); Seppälä, Mikael, 00210 Helsinki (FI)
(74) Representative: Roitto, Klaus

(57) **Abstract**

The invention relates to a bearing mechanism comprising an axle part (4) and a bushing part (7), which is arranged to rotate supported to the axle part, and a torsion spring (6) arranged around the axle (9) of the axle part and arranged to become stressed and to provide a counter force to the rotation of the bushing part, whereby the axle part comprises a stopper (10) whose rotation in relation to the bushing part is arranged to provide stress in the torsion spring (6), and the bushing part comprises an abutment (14) which is arranged to provide stress in the torsion spring (6), the bearing mechanism comprising an annular part (5) rotating supported to the axle (9) of the axle part, which annular part comprises an abutment (13) that is arranged to rotate in relation to the torsion spring (6). In order that the bearing mechanism would allow a large free rotational movement of the bushing part (7) the abutment (13) of the annular part is arranged, without stressing the torsion spring, to support to the first end (11) or the second end (12) of the torsion spring, the torsion spring (6) is arranged to rotate in relation to the abutment (14) of the bushing part and the abutment (14) of the bushing part is arranged, without stressing the torsion spring, to support to the first end (11) or the second end (12) of the torsion spring.

## Description

### BACKGROUND OF THE INVENTION

The invention relates to a bearing mechanism which comprises an axle part and a bushing part that is arranged to rotate supported to the axle part, and a torsion spring arranged around the axle of the axle part, comprising a first end and a second end and arranged to become stressed and to provide a counter force to the rotation of the bushing part, whereby the axle part comprises a stopper whose rotation in relation to the bushing part is arranged to provide stress in the torsion spring, and the bushing part comprises an abutment whose rotation in relation to the axle part is arranged to provide stress in the torsion spring, the bearing mechanism comprising an annular part rotating supported to the axle of the axle part, which annular part comprises an abutment that is arranged to rotate in relation to the torsion spring.

Bearing mechanisms, in which a torsion spring restores a bushing part to a given position in relation to the axle after the bushing part is no longer subjected to external torsional forces, are well known. From publication DE 202005018572 U1 is known a bearing mechanism of the above type.

### BRIEF DESCRIPTION OF THE INVENTION

The object of the invention is to provide a bearing mechanism that allows a large, free rotational movement of a bushing part, whereafter a resilient rotational movement may be large, depending on the dimensioning of the torsion spring. The bearing mechanism having these features may be used in a plurality of applications, where, for instance, breakage of wires and hoses due to twisting is to be prevented.

The bearing mechanism is characterized in that the abutment of an annular part is arranged, without stressing the torsion spring, for being mounted to support to a first or a second end of the torsion spring, depending on the position of the abutment of the annular part, that the torsion spring is arranged to rotate in relation to the abutment of the bushing part and that the abutment of the bushing part is arranged, without stressing the torsion spring, for being mounted to support to the first or second end of the torsion spring, depending on the position of the abutment of the bushing part.

Advantageously the abutment of the annular part is arranged, without stressing the torsion spring, to rotate freely in relation to the torsion spring between the free ends of the torsion spring for a first angle, the magnitude of which is determined by the angle between the unstressed ends of the torsion spring minus an angular portion required by the abutment of the annular part, and which abutment of the annular part, along with the rotation of the bushing part, is further arranged, without stressing the torsion spring, to rotate freely in relation to a stopper of the axle part for a second angle, the magnitude of which is determined by the angle between the unstressed ends of the torsion spring minus an angular portion required by the abutment of the bushing part, whereby as a result of the rotation of the bushing part the abutment of the bushing part is arranged to stress the torsion spring when the abutment of the annular part rotates for an angle the magnitude of which exceeds the combined value of the first and the second angles, whereby the abutment of the bushing part is arranged to rotate in relation to the axle part, without stressing the torsion spring, for an angle that is 360 degrees added with an angle between the unstressed ends of the torsion spring multiplied by two and subtracted with an angular portion required by the abutment of the annular part multiplied by two and further subtracted with an angular portion required by the abutment of the bushing part and an angular portion required by the stopper.

Preferably the bushing part is arranged without stressing the torsion spring to rotate freely in relation to the axle part for more than 360 degrees.

Preferred embodiments of the bearing mechanism in accordance with the invention are disclosed in attached claims 2 to 10.

The bearing mechanism of the invention has an advantage that it allows a large, free rotational movement of the bushing part, after which a resilient rotational movement may be large, depending on the dimensioning of the torsion spring. These features are important in applications, where large rotational movements between machine parts are to be permitted, but at the same time excessive rotational movement between the machine parts is to be limited, which would damage the wires, hoses, pipes and other surface and lead-in fittings. Thus, in applications, where a relatively large rotational movement is desired, the bearing mechanism of the invention adds significantly the service life of machine parts and the surface and lead-in fittings between them. At the same time, the bearing mechanism increases the machine utilization degree, because malfunctions and breakdowns due to twisting will not occur. The latter features are important particularly in wind power stations. The bearing mechanism of the invention is particularly well suited for use in wind power stations, whereby the bushing part of the bearing mechanism is arranged to turn along with the turning of the rotor part of the wind turbine and the axle part is arranged to be immobile in relation to the body of the wind turbine. In the wind power station application the bushing part is arranged without stressing the torsion spring to rotate freely in relation to the axle part, preferably for more than 500 degrees. When applied to a wind power station, the bearing mechanism allows continuous operation of the wind power station without control and expensive control devices.

The bearing mechanism of the invention has further advantages that its structure is simple, it is economical to manufacture, easy to install on site, reliable in operation and maintenance free. Furthermore, it only takes little space.

### BRIEF DESCRIPTION OF THE DRAWINGS

In the following, the invention will be described in greater detail, by means of examples, with reference to the attached drawing, in which
Figure 1 shows an important application of the bearing mechanism of the invention;
Figure 2 is an exploded view of the structure of the bearing mechanism;
Figures 3 to 5 illustrate the operation of the bearing mechanism of the invention;
Figure 6 is a view of the bearing mechanism, seen in the axial direction and cut open, and illustrates the paths of its components, and
Figure 7 illustrates a second embodiment of the bearing mechanism, seen in the axial direction and cut open.

### DETAILED DESCRIPTION OF THE INVENTION

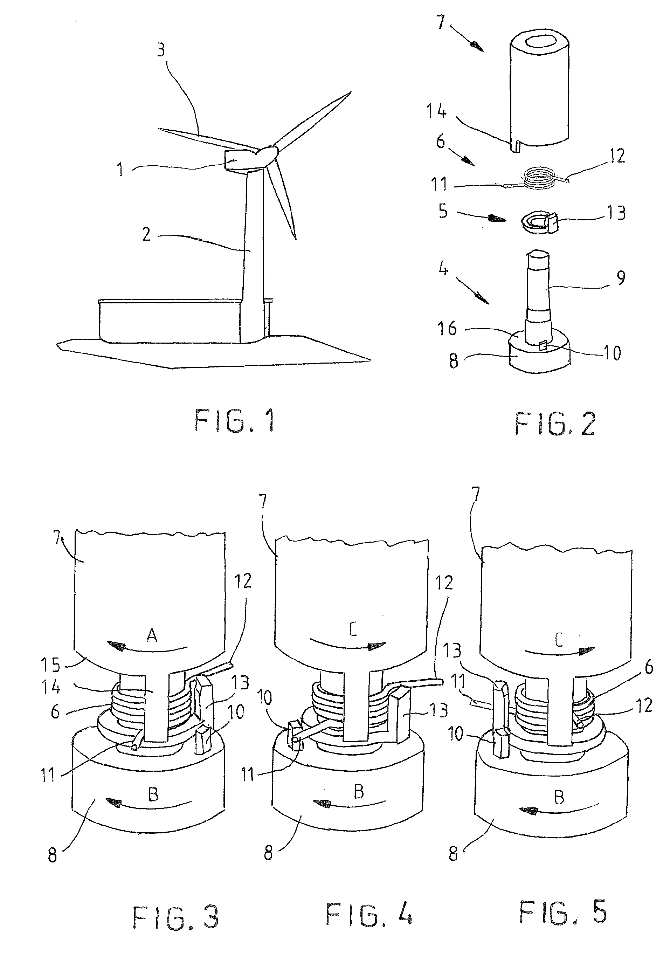

Figure 1 shows a wind power station, in which a rotor part 1 is arranged to turn or rotate in relation to a body part 2 of the wind power station such that rotor blades 3 of the rotor part will be at a desired angle to the wind direction. The bearing mechanism which enables turning/rotation of the rotor part is shown as an explosion view in Figure 2.

The bearing mechanism of Figure 2 comprises an axle part 4, an annular part 5, a torsion spring 6 and a bushing part 7. The axle part 4 is immobile in relation to the body part 2 of the wind turbine, and the bushing part 7 is immobile in relation to the rotor part 3, whereby the bushing part rotates with the rotor part.

The annular part 5, the torsion spring 6 and the bushing part 7 may all turn in relation to the axle part, which will be described below.

The axle part 4 of the bearing mechanism comprises a body 8 and an axle 9. The body 8 includes a stopper 10, which together with the structure of the annular part 5, the torsion spring 6 and the bushing part 7 determine, how much the bushing part 7 is allowed to rotate in relation to the axle part 4. The annular part 5 and the torsion spring 6 determine the magnitude of motion resistance of the bushing part 7 as the bushing part 7 rotates in relation to the body part 2.

The torsion spring 6 comprises two free ends 11 and 12, the annular part comprises an abutment 13 and the bushing part 7 comprises an abutment 14. In order to make the torsion spring 6 stressed, the abutment 14 of the bushing part is to set against either one of the ends 11 or 12 of the torsion spring, and the abutment 13 of the annular part is to set against the other end 12 or 11 of the torsion spring. At the same time the stopper 10 of the axle part is to set against the abutment 13 of the annular part.

Figures 3 to 5 show the bearing mechanism assembled and in various operating positions. The figures illustrate how the bushing part 7, the annular part 5 and the torsion spring 6 rotate in relation to the body 8 of the axle part and the stopper 10 thereof, even though the bushing part 7 is shown in all figures in the same position with respect to the viewer.

In Figure 3, the upper end 12 of the torsion spring 6 is against the abutment 13 of the annular part and the lower end 11 of the torsion spring is against the abutment 14 of the bushing part. The torsion spring 6 is in an unstressed state. If the bushing part 7 were rotated in the direction of arrow A, the axle part 4 and the body 8 thereof remaining stationary, the torsion spring 6 would become stressed.

In Figure 4, as compared to the situation in Figure 3, the bushing part 7 is turned/rotated in relation to the body 8 of the axle part in the direction of arrow C, because the body 8 of the axle part with the stopper 10 has shifted, as shown in the figure, (as compared to the situation in Figure 3) in the direction of arrow B. The upper surface of the stopper 10 is located lower than the lower end 11 of the torsion spring, so the stopper may rotate past the ends 11 and 12 of the torsion spring. Compared with the situation in Figure 3, the body with its stopper 10 has shifted about 165 degrees in the direction of arrow B in relation to the bushing part 7. The upper end 12 of the torsion spring 6 is still against the abutment 13 of the annular part and in an unstressed state.

In Figure 5, in comparison with the situation in Figure 4, the bushing part 7 is further rotated in relation to the axle part 4, because the body 8 of the axle part with the stopper 10 is rotated in the direction of arrow B to the extent that its stopper 10 comes in contact with the abutment 13 of the annular part 5. The further rotation (compared with the situation in Figure 4) is about 350 degrees. During the further rotation the annular part 5 rotates freely for about 170 degrees, pushed by the stopper 10. The torsion spring 6 is still in an unstressed state, even though it has rotated freely in the direction of arrow B for about 50 degrees, pushed by the abutment 13 of the annular part 5 and the stopper 10 of the axle part 9. In the situations of Figures 3 and 5, the annular part 5 has rotated freely in the rotating direction of arrow B without stressing the torsion spring 6. Compared with the situation of Figure 3, the bushing part 7 has rotated freely (without the torsion spring 6 being stressed) in total for 165 + 350 = 515 degrees in relation to the axle part 4 and the body 8 thereof.

If the axle part 4 is rotated further from the situation of Figure 5 in the direction of arrow B, while the bushing part remains immobile, the torsion spring 6 starts becoming stressed. Correspondingly, if the bushing part 7 rotated in the direction of arrow C, the body 8 remaining immobile, the torsion spring 6 would start becoming stressed. The bushing part 7 may rotate from the position of Figure 5 in the direction of arrow A for 105 degrees, for instance, such that it achieves a first extreme position, whereby the total amount of rotation of the bushing part is 515 + 105 = 620 degrees as compared with the situation in Figure 3, and the torsion spring becomes stressed, the stress corresponding to the rotation of the free ends 11 and 12 of the torsion spring in relation to one other. When the bushing part 7 is not subjected to external forces, the spring force of the torsion spring 6 returns the bushing part 7 into a position, where the abutment 14 of the bushing part does not stress the torsion spring 6.

The bushing part 7 may rotate from the situation in Figure 3 in the direction of arrow A, whereby the torsion spring 6 also becomes stressed. The bushing part 7 may rotate in said direction for 105 degrees, for instance, such that it achieves a second extreme position, whereby the torsion spring 6 will be in a stressed state, corresponding to the rotation of its free ends 11, 12 in relation to one another. Between said two extreme positions the total amount of rotation of the bushing part 6 may, in the exemplary case, be 620 + 105 = 725 degrees, i.e. a good two rounds, of which 515 degrees, i.e. almost 1.5 rounds, may be performed without stressing the torsion spring 6 at all.

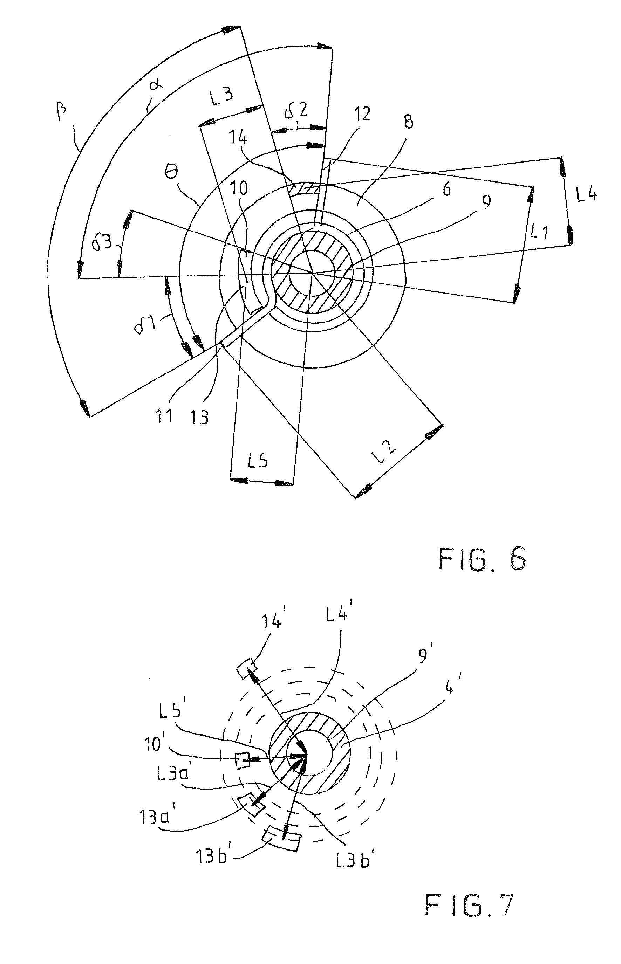

Figure 6 illustrates a cross-sectional view of the bearing mechanism in its axial 9 direction at a point, which is above the annular abutment 13 but below the cylindrical lower edge 14 of the bushing part 7, cf. Figure 3. It appears from the figure that the stopper 10 of the axle part 4 and the abutment 13 of the annular part 5 are at the same radial distance L3 from the centre of the axle 9 of the axle part. The distance L3 is shorter than the distance L1, L2 of the ends 11 and 12 of the torsion spring from the centre of the axle 9 of the axle part. The abutment 14 of the bushing part 7 is at a longer radial distance L4 from the centre of the axle of the axle part than the distances L1 and L2. Said arrangement makes it possible that the abutment 14 of the bushing part 7 is able to bypass the stopper 10 and the abutment 13.

In Figure 6, θ = about 130 degrees indicates the angle between the ends 11, 12 of the unstressed torsion spring 6. δ1 = about 35 degrees indicates an angular portion required by the abutment 13 of the annular part; δ2 = about 20 degrees indicates an angular portion required by the abutment 14 of the bushing part; δ3 = about 15 degrees indicates an angular portion required by the stopper 10.

In Figure 6, the bushing part 7 with its abutment 14 may rotate anti-clockwise for an angle of δ - δ2 = about 110 degrees without the torsion spring being stressed, whereafter the abutment 14 comes into contact with the lower end 11 of the torsion spring. When the bushing part 7 rotates further anti-clockwise, its abutment 14 pushes the torsion spring anti-clockwise for an angle of δ - δ1 - δ3 = about 80 degrees without stressing the torsion spring, whereby the upper end 12 of the torsion spring reaches the stopper 10. As the abutment 14 rotates further for an angle δ3 = about 15 degrees, the torsion spring 6 rotates anti-clockwise further without being stressed and the upper end 12 of the torsion spring comes into contact with the abutment 13. When the abutment 14 rotates further anti-clockwise for an angle of 360 degrees - δ1 - δ3 = about 310 degrees, it pushes the lower end 11 of the torsion spring anti-clockwise without stressing the torsion spring and the abutment 13 rotates anti-clockwise and comes into contact with the stopper 10 and stops there. Now the bushing part 7 with its abutment 14 has turned in total 110 + 80 + 15 + 310 = about 515 degrees without stressing the torsion spring 6. In this position the upper end 12 of the torsion spring is supported to the abutment 13 and the lower end 11 of the torsion spring to the abutment 14. If the bushing part 7 with its abutment is turned further anti-clockwise, the torsion spring 6 starts becoming stressed. If in the situation shown in Figure 6 the bushing part 7 with its abutment 14 is rotated clockwise, the torsion spring 6 starts becoming stressed immediately.

In the above, the thickness of the ends 11 and 12 of the torsion spring has been ignored, because, in practice, the thickness of the ends is so small that it has no actual effect on how much the bushing part 7 may rotate in relation to the axle part 4.

A free movement of the annular part 5 without stressing the torsion spring 6 is α + β, where α is θ - δ1 and β is θ - δ2. If the annular part 5 rotates beyond the angle α + β, the torsion spring starts stressing, irrespective of the direction of rotation of the bushing part 7.

Figure 7 illustrates a second embodiment of the bearing mechanism, which differs from the embodiment of Figures 2 to 6 such that it comprises two annular parts. The abutments of the annular parts are indicated by reference numerals 13a' and 13b'. It appears from the figure that they are placed at different radial distances L3a', L3b' from the centre of the axle 9', the distances being selected such that the abutments 13a' and 13b' are not able to go past one another without colliding with one another. The stopper 10 may, however, go past the abutment 13b' without colliding therewith, but it may not go past the abutment 13a' without colliding therewith. The abutment 14' of the bushing part is at such a long distance L4' from the centre of the axle 9' that it may go past the abutments 13a' and 13b' without colliding therewith. However, the distance L4' is shorter than the distance of the torsion spring ends from the centre of the axle 9'. For the sake of simplicity, the torsion spring does not appear in Figure 7. Thanks to said arrangement, in the solution of Figure 7, the bushing part may rotate in relation to the axle part 4' for about 350 degrees (360 degrees minus an angular portion required by the width of the abutment 13b', which is about 10 degrees) more than in the solution of Figures 2 to 6.

In the above the invention is only described by means of examples and therefore it should be noted that the details of the invention may differ in a variety of ways within the scope of the attached claims. The abutments 13, 14, 13a', 13b' may have recesses for receiving the ends of the torsion spring.

## Claims

1. A bearing mechanism which comprises an axle part (4, 4') and a bushing part (7) that is arranged to rotate supported to the axle part, and a torsion spring (6) arranged around the axle (9, 9') of the axle part, comprising a first end (11) and a second end (12) and arranged to become stressed and to provide a counter force to the rotation of the bushing part, whereby the axle part comprises a stopper (10, 10') whose rotation in relation to the bushing part (7) is arranged to provide stress in the torsion spring (6), and the bushing part (7) comprises an abutment (14, 14') whose rotation in relation to the axle part (4, 4') is arranged to provide stress in the torsion spring (6), the bearing mechanism comprising an annular part (5) rotating supported to the axle (9, 9') of the axle part, which annular part comprises an abutment (13, 13a', 13b') that is arranged to rotate in relation to the torsion spring (6), **characterized in that** the abutment (13, 13a', 13b') of an annular part is arranged, without stressing the torsion spring (6), for being mounted to support to a first (11) or a second (12) end of the torsion spring, depending on the position of the abutment of the annular part, that the torsion spring (6) is arranged to rotate in relation to the abutment (14, 14') of the bushing part and that the abutment (14, 14') of the bushing part is arranged, without stressing the torsion spring, for being mounted to support to the first (11) or second (12) end of the torsion spring, depending on the position of the abutment of the bushing part.

2. The bearing mechanism of claim 1, **characterized in that** the abutment (13, 13a', 13b') of the annular part (5) is arranged, without stressing the torsion spring (6), to rotate freely in relation to the torsion spring (6) between the free ends (11, 12) of the torsion spring for a first angle (α), the magnitude of which is determined by the angle (θ) between the unstressed ends of the torsion spring minus an angular portion (δ1) required by the abutment (13, 13a', 13b') of the annular part, and which abutment (13, 13a', 13b') of the annular part, along with the rotation of the bushing part (7), is further arranged, without stressing the torsion spring (6), to rotate freely in relation to a stopper (10, 10') of the axle part for a second angle (β), the magnitude of which is determined by the angle (θ) between the unstressed ends (11, 12) of the torsion spring (6) minus an angular portion (δ2) required by the abutment (14) of the bushing part, whereby as a result of the rotation of the bushing part the abutment (14, 14') of the bushing part (7) is arranged to stress the torsion spring (6) when the abutment (13, 13a', 13b') of the annular part rotates for an angle the magnitude of which exceeds the combined value of the first (α) and the second (β) angles, whereby the abutment (14) of the bushing part is arranged to rotate in relation to the axle part (10), without stressing the torsion spring (6), for 360 degrees added with an angle (θ) between the unstressed ends (11, 12) of the torsion spring multiplied by two and subtracted with an angular portion (δ1) required by the abutment (13, 13a', 13b') of the annular part multiplied by two and further subtracted with an angular portion (δ2) required by the abutment (14) of the bushing part and an angular portion (δ3) required by the stopper (10, 10').

3. The bearing mechanism of claim 1 or 2, **characterized in that** the stopper (10) of the axle part and the abutment (13) of the annular part are at the same radial distance (L3) from the axle (9) of the axle part, the radial distance being shorter than the longest distance (L1, L2) of the torsion spring ends (11, 12) from the axle (9) of the axle part.

4. The bearing mechanism of claim 3, **characterized in that** the abutment (14) of the bushing part is at a longer radial distance (L4) from the axle (9) of the axle part than the distances (L3) of the stopper (10) and the abutment (13) of the annular part from the axle of the axle part.

5. The bearing mechanism of any one of the preceding claims, **characterized in that** the bushing part (7) is supported to the axle part (4) also with a thrust bearing (16).

6. The bearing mechanism of any one of the preceding claims, **characterized in that** the magnitude of the angle (θ) between the ends (11, 12) of the unstressed torsion spring (6) is 10 to 350 degrees.

7. The bearing mechanism of any one of the preceding claims, **characterized in that** the bushing part (7) is arranged to rotate freely, without stressing the torsion spring (6), in relation to the axle part (4) for an angle exceeding 360 degrees.

8. The bearing mechanism of claim 7, **characterized in that** the bushing part (7) is arranged to rotate freely, without stressing the torsion spring (6), in relation to the axle part (4) for an angle exceeding 500 degrees.

9. The bearing mechanism of claim 1, **characterized by** comprising a plurality of annular parts with abutments (13a', 13b'), whose distance (L3a', L3b') from the axle (4') is graduated to increase the free rotational movement.

10. A wind power station comprising the bearing mechanism of any one of the preceding claims, **characterized in that** the bushing part (7) of the bearing mechanism is arranged to turn along with the turning of a rotor part (2) of the wind turbine and that the axle part (7) of the bearing mechanism is arranged to be immobile in relation to the body (2) of the wind turbine.
